# EUROPÄISCHE PATENTANMELDUNG

(11) **EP 1 507 057 A2**
(43) Veröffentlichungstag der Anmeldung: **16.02.2005**
(21) Anmeldenummer: 04450162.5
(22) Anmeldetag: 13.08.2004
(51) Int. Cl.: E05D 15/10, E05F 15/14

(54) **Schwenkschiebetür**

(30) Priorität: 14.08.2003 AT 5592003 U
(71) Anmelder: Ultimate Transportation Equipment GmbH, 3300 Amtstetten (AT)
(72) Erfinder: Teufl, Manfred, 3332 Rosenau (AT)
(74) Vertreter: KLIMENT & HENHAPEL

(57) **Zusammenfassung**

Schwenkschiebetür zum Verschließen von Durchtrittsöffnungen in einer Fahrzeugwand (1) mithilfe eines Schließantriebes (7), die im Zuge der Schließbewegung von mindestens einer Führungseinrichtung in einer ersten Schließphase vor die Durchtrittsöffnung geschoben wird und in einer zweiten Schließphase in die Durchtrittsöffnung versetzt wird, wobei für die erste Schließphase eine erste Führungseinrichtung (9,6) mit einem ersten elektrischen Schließantrieb (7B) vorgesehen ist, und für die zweite Schließphase eine zweite Führungseinrichtung (20,14) mit einem zweiten elektrischen Schließantrieb (7A) vorgesehen ist und beide Schließantriebe im oberen Bereich vorzugsweise im oberen Drittel der Schwenkschiebtür angeordnet sind, wobei die Führungseinrichtungen als Linerkugelführungen ausgebildet sind.

## Beschreibung

Die vorliegende Erfindung betrifft eine Schwenkschiebetür zum Verschließen von Durchtrittsöffnungen in einer Fahrzeugwand mithilfe eines Schließantriebes, die im Zuge der Schließbewegung von mindestens einer Führungseinrichtung in einer ersten Schließphase vor die Durchtrittsöffnung geschoben wird und in einer zweiten Schließphase in die Durchtrittsöffnung versetzt wird.

Schwenkschiebetüren dieser Art werden im Zuge der Schließbewegung in einer ersten Schließphase vor die Durchtrittsöffnung geschoben und in einer zweiten Schließphase mit variablem Anpressdruck in die Durchtrittsöffnung versetzt. Die Schwenkschiebetür wird bei diesem Bewegungsvorgang von einer Führungseinrichtung geleitet, die unterschiedlich ausgeführt sein kann. So kann etwa die Schwenkschiebetür an einem Gleitlager befestigt sein, das in einer Führung geleitet wird. Ist die Führung, etwa eine Gleitschiene, so ausgebildet, dass sie über einen zur Fahrzeugwand im wesentlichen parallelen Abschnitt verfügt und fließend in einen weiteren Abschnitt, der sich der Durchtrittsöffnung annähert, übergeht, so wird sich eine durch diese Führung geleitete Schwenkschiebetür in ihrer Schließbewegung zunächst vor die Durchtrittsöffnung schieben und in weiterer Folge in die Durchtrittsöffnung einsetzen.

Die Bewegung der Schwenkschiebetür stellt sich somit als ein kinematischer Vorgang dar, bei dem ein Schließantrieb für eine zur Fahrzeugwand im wesentlichen parallele Beschleunigung der Schwenkschiebetür sorgt, wobei aufgrund einer abgelenkten Führung diese Parallelbewegung in eine dazu transversale Bewegung, also eine Bewegung in Richtung der Fahrzeugwand, übergeht. Der Schließantrieb ist dabei auf die Beschleunigung der Schwenkschiebetür ausgelegt, die hinreichend rasch bewegt werden soll. Durch die Kombination beider Bewegungsphasen in einem Bewegungsablauf wird somit die gesamte kinetische Energie des Türblattes der Schwenkschiebetür von der Parallelbewegung in die Transversalbewegung übernommen. Das bedingt mitunter einen erheblichen Anpressdruck der Schwenkschiebetür in der Durchtrittsöffnung und somit entsprechend starke Einklemmkräfte an der Hauptschließkante der Schwenkschiebetür, wodurch sich ein Verletzungsrisiko für die Fahrgäste ergibt.

Es ist somit Ziel der Erfindung diesen Nachteil zu vermeiden und eine Schwenkschiebetür zu verwirklichen, bei der die Einklemmkräfte an der Hauptschließkante auf ein Minimum reduzierbar sind. Dieses Ziel wird durch die kennzeichnenden Merkmale von Anspruch 1 erreicht.

Anspruch 1 sieht hierbei vor, dass für die erste Schließphase eine erste Führungseinrichtung mit einem ersten elektrischen Schließantrieb vorgesehen ist, und für die zweite Schließphase eine zweite Führungseinrichtung mit einem zweiten elektrischen Schließantrieb vorgesehen ist und beide Schließantriebe im oberen Bereich vorzugsweise im oberen Drittel der Schwenkschiebtür angeordnet sind, wobei die Führungseinrichtungen als Linerkugelführungen ausgebildet sind. Dadurch werden beide Bewegungsphasen kinematisch entkoppelt. Die Parallelbewegung wird durch den ersten Schließantrieb vermittelt, der auf eine optimale Beschleunigung des Türblattes der Schwenkschiebetür abgestimmt werden kann und der die Einklemmkräfte an der Hauptschließkante definiert. Der zweite Schließantrieb bewegt das Türblatt in die Durchtrittsöffnung. Die erste Führungseinrichtung kann nun auf eine optimale Parallelbewegung des Türblattes der Schwenkschiebetür ausgelegt werden. Die zweite Führungseinrichtung vermittelt lediglich die anschließende Transversalbewegung.

Anspruch 2 schlägt eine Ausführungsform der ersten Führungseinrichtung vor, der zu Folge die erste Führungseinrichtung von einem sich quer über den oberen Bereich der Durchtrittsöffnung erstreckenden Führungsrund gebildet wird, auf dem ein mit der Schwenkschiebetür verbundener Schlitten verschiebbar gelagert ist. Ist gemäß Anspruch 3 das Führungsrund in einem Tragrahmen gehalten, der in Durchtrittsrichtung beweglich gelagert ist, so wird, wie im folgenden noch ersichtlich werden wird, der Übergang von der Parallelbewegung in eine Transversalbewegung des Türblattes in konstruktiv einfacher Weise ermöglicht.

Anspruch 4 schlägt eine Ausführungsform für die zweite Führungseinrichtung vor, wobei zunächst vorgesehen ist, dass der Schlitten mit einer Rolle ausgestattet ist, die während der ersten Schließphase an einem sich quer über den oberen Bereich der Durchtrittsöffnung erstreckenden Grundprofil abrollt. Zur Verwirklichung der zweiten Führungseinrichtung ist das Grundprofil mit einem Schlitz in Durchtrittsrichtung versehen, der die Rolle bei einer Bewegung des Tragrahmens in Durchtrittsrichtung aufnimmt und während der zweiten Schließphase führt. Die konstruktive Kopplung des Tragrahmens mit dem zweiten Schließantrieb ist Gegenstand von Anspruch 5, der vorsieht, dass der Tragrahmen mit einer Schwenkscheibe ausgestattet ist, die vom zweiten Schließantrieb angetrieben wird, wobei die Schwenkscheibe über eine Verbindungsstange mit einer fest an der Fahrzeugwand montierten Tragkonsole verbunden ist, sodass bei Betätigung des zweiten Schließantriebes der Tragrahmen in Durchtrittsrichtung bewegbar ist.

Um das Türblatt der Schwenkschiebetür nicht nur in dessen oberen Bereich zu führen, sind die Merkmale von Anspruch 6 vorgesehen. Anspruch 6 sieht hierbei vor, dass eine Zug- und Druckstange vorgesehen ist, die mit der Schwenkscheibe sowie mit Schließrollen verbunden ist, die in Führungsschienen im unteren Bereich der Schwenkschiebetür eingreifen, sodass bei Betätigung des zweiten Schließantriebes die durch die Schwenkscheiben vermittelte Bewegung der Schwenkschiebetür in Durchtrittsrichtung durch die Schließrollen unterstützt wird.

Die Bewegung des Türblattes während der ersten Schließphase ist Gegenstand von Anspruch 7, der vorsieht, dass der erste Schließantrieb eine Gewindespindel antreibt, der mit einer Spindelmutter zusammenwirkt, die in Eingriff mit dem Schlitten steht.

Die Erfindung wird im folgenden anhand der beiliegenden Figuren näher erläutert. Es zeigt hierbei
Fig. 1a den Grundriss einer erfindungsgemäßen Schwenkschiebetür im geschlossenen Zustand,
Fig. 1b eine Seitenansicht von Schlitten, Führungsrund mit Rahmen und Tragkonsole für die Tür im geschlossenen Zustand gemäß Fig. 1a,
Fig. 2a den Grundriss einer erfindungsgemäßen Schwenkschiebetür im offenen Zustand,
Fig. 2b eine Seitenansicht von Schlitten, Führungsrund mit Rahmen und Tragkonsole für die Tür im offenen Zustand gemäß Fig. 2a,
Fig. 3 den Aufriss einer erfindungsgemäßen Schwenkschiebetür im geschlossenen Zustand,
Fig. 4 eine Darstellung der Zusatzverriegelung,
Fig. 5 eine schematische Darstellung des Bewegungsablaufes einer Ausführungsform einer Schwenkschiebetür gemäß dem Stand der Technik,
Fig. 6 eine schematische Darstellung des Bewegungsablaufes einer weiteren Ausführungsform einer Schwenkschiebetür gemäß dem Stand der Technik, und
Fig. 7 eine schematische Darstellung des Bewegungsablaufes einer erfindungsgemäßen Schwenkschiebetür.

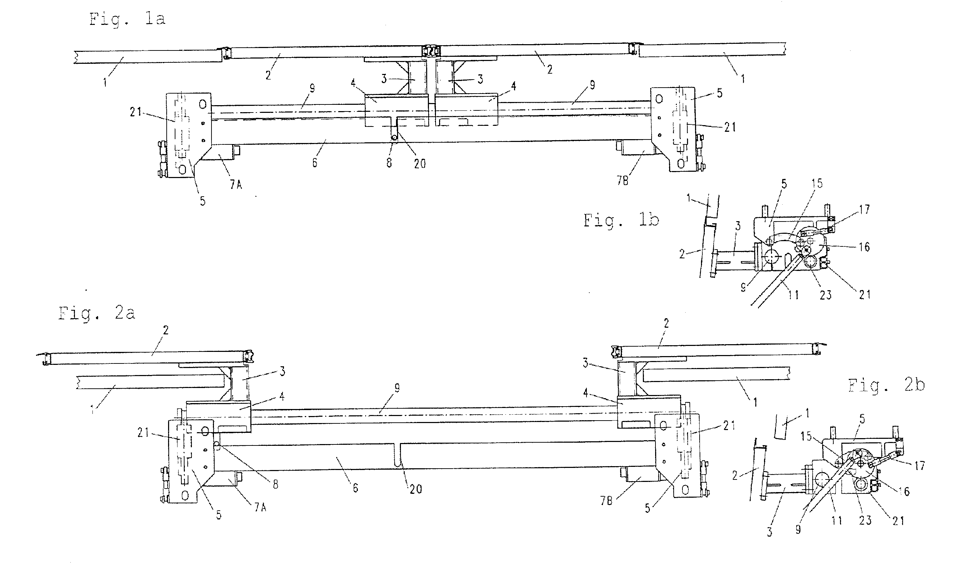

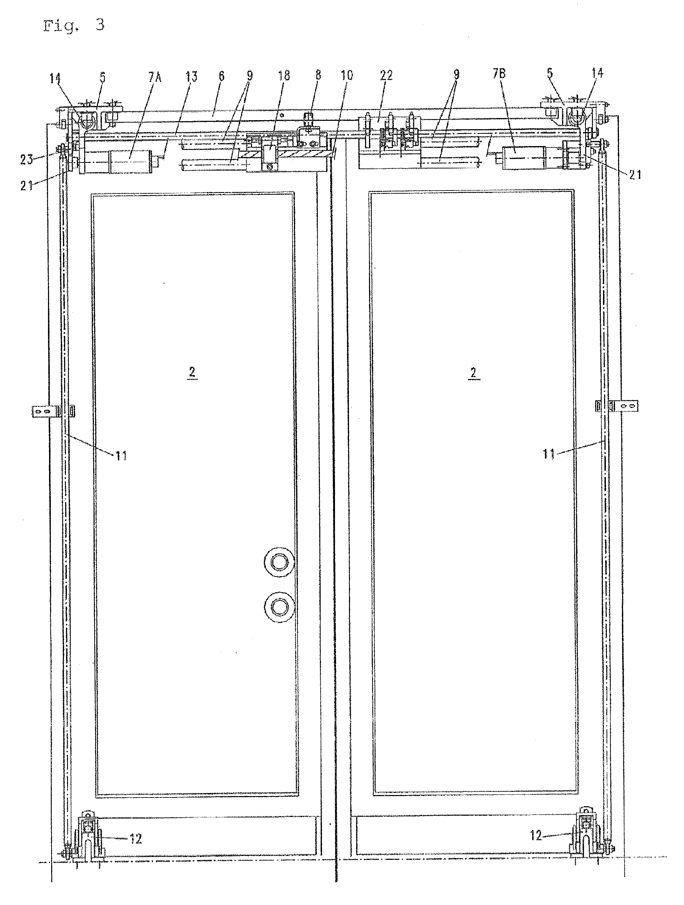

Fig.1 zeigt den Grundriss einer Ausführungsform einer erfindungsgemäßen Schwenkschiebetür zum Verschließen einer Durchtrittsöffnung in einer Fahrzeugwand 1. Hierbei ist eine Schwenkschiebetür mit zwei Türblättern 2 dargestellt, wobei die Erfindung auch Anwendung für Schwenkschiebetüren mit lediglich einem einzigen Türblatt 2 findet. Fest mit der Innendecke der Fahrzeugbehausung verbunden sind Tragkonsolen 5 beiderseits der Durchtrittsöffnung sowie ein im oberen Umfangsbereich der Durchtrittsöffnung angeordnetes Grundprofil 6, das sich zwischen den beiden Tragkonsolen 5 erstreckt. Die Tragkonsolen 5 beinhalten jeweils ein Führungsrund 14 (siehe auch Fig. 3), auf denen ein Tragrahmen 21 etwa mittels Linearkugelführung beweglich gelagert ist. Dieses Führungsrund 14 erstreckt sich in Durchtrittsrichtung, also im wesentlichen normal zur Fahrzeugwand 1, und ermöglicht somit eine Bewegung des Tragrahmens in Durchtrittsrichtung.

Am Tragrahmen ist ein weiteres Führungsrund 9 befestigt, das sich in einer zur Fahrzeugwand 1 im wesentlichen parallelen Richtung zwischen den beiden Tragrahmen erstreckt. Gegebenenfalls kann dieses Führungsrund 9 durch ein zweites Führungsrund 9 ergänzt sein, wie dies etwa in Fig. 3 dargestellt ist. Auf dem Führungsrund 9 sind zwei Schlitten 4 etwa über Linearkugelführungen beweglich gelagert, deren Bewegungsrichtung sich somit in einer zur Fahrzeugwand 1 im wesentlichen parallelen Richtung erstreckt. An den Schlitten 4 ist jeweils ein Türblattträger 3 befestigt, an denen wiederum jeweils das Türblatt 2 befestigt ist.

Einer der beiden Schlitten 4 ist des weiteren mit einer vertikal nach oben abstehenden Rolle 8 ausgestattet, die am Grundprofil 6 anliegt und im Zuge der Öffnungs- und Schließbewegung des entsprechenden Türblattes 2 am Grundprofil 6 abrollt. Das Grundprofil 6 ist des weiteren mit einem Schlitz 20 versehen, dessen Breite den Durchmesser der Rolle 8 nur geringfügig überschreitet. Die Position des Schlitzes 20 ist dabei so gewählt, dass bei sich berührenden Türblättern 2 nach Abschluss der Parallelbewegung im Zuge der Schließbewegung der Schwenkschiebetür die Rolle 8 vor dem Schlitz 20 zu liegen kommt. Im Zuge der Transversalbewegung der Türblätter 2 wird somit die Rolle 8 vom Schlitz 20 aufgenommen und rollt in ihm ab.

Beiderseits der Durchtrittsöffnung ist des weiteren jeweils ein Motor 7 angeordnet. Einer der beiden Motoren 7B, in den Fig. 1 bis 3 etwa jener an der rechten Seite der Durchtrittsöffnung, treibt eine Gewindespindel 10 an, die sich über die gesamte Durchtrittsöffnung in einer zur Fahrzeugwand 1 im wesentlichen parallele Richtung erstreckt. Die Gewindespindel 10 trägt zwei Spindelmuttern 18, die jeweils mit einem Schlitten 4 fest verbunden sind. Eine durch den rechten Motor 7B vermittelte Drehbewegung der Gewindespindel 10 wird somit durch die Spindelmuttern 18 in eine Längsbewegung der Schlitten 4 umgewandelt, wobei die Gewindespindel in den beiden Hälften der Durchtrittsöffnung ein entgegengesetztes Gewinde aufweist, sodass eine Drehbewegung der Gewindespindel 10 in einer Rotationsrichtung für eine Längsbewegung der Schlitten 4 in entgegengesetzter Richtung sorgt. Dadurch wird bei zweiflügeligen Schwenkschiebetüren die Längsbewegung beider Türblätter 2 synchronisiert. In Fig. 3 ist die Gewindespindel 10 nur ausschnittsweise dargestellt, sie erstreckt sich aber über einen Bereich über die gesamte Durchtrittsöffnung, sodass sowohl in der äußersten Position der Schlitten 4 als auch in deren innersten Position die Spindelmutter 18 in Eingriff mit dem Gewinde der Gewindespindel 10 steht. Auch das Führungsrund 9 ist in Fig. 3 nur ausschnittsweise dargestellt, es erstreckt sich ebenfalls über einen Bereich über die gesamte Durchtrittsöffnung, sodass sowohl in der äußersten Position der Schlitten 4 als auch in deren innersten Position die Schlitten 4 vom Führungsrund 9 geführt sind. Im Bereich des in Fig. 3 rechten Türblattes 2 sind Gewindespindel 10 sowie Führungsrund 9 außerdem von einer Notbetätigungseinrichtung 22 überdeckt, die ein manuelles Öffnen der Schwenkschiebetür bei Funktionsuntüchtigkeit der Motoren 7 ermöglicht.

Jeder der beiden Tragrahmen trägt des weiteren eine Schwenkscheibe 16, an der in ihrem äußeren Umfangsbereich eine Verbindungsstange befestigt ist, die an ihrem anderen Ende mit der Tragkonsole 5 fest verbunden ist. Dadurch wird somit der bewegliche Tragrahmen mit der unbeweglichen Tragkonsole 5 verbunden. Eine der beiden Schwenkscheiben 16 wird durch einen zweiten Motor 7A angetrieben, der sich in den Fig. 1 bis 3 etwa auf der linken Seite der Durchtrittsöffnung befindet. Diese Schwenkscheibe, in der in den Fig. 1 bis 3 dargestellten Ausführungsform somit die linke Schwenkscheibe 16, ist mit der Schwenkscheibe 16 des anderen Tragrahmens, in der in den Fig. 1 bis 3 dargestellten Ausführungsform somit jener auf der rechten Seite der Durchtrittsöffnung, mit einer Synchronisationsstange 13 verbunden, sodass der die linke Schwenkscheibe 16 antreibende linke Motor 7A auch die rechte Schwenkscheibe 16 antreibt.

Mit jeder der beiden Schwenkscheiben 16 ist in ihrem äußeren Umfangsbereich des weiteren eine Zug- und Druckstange 11 befestigt, die jeweils in den seitlichen Umfangsbereichen der Durchtrittsöffnung in einer im wesentlichen vertikalen Richtung zum Boden der Fahrzeugbehausung entlang läuft und dort mit einer im unteren Drittel der Fahrzeugbehausung beiderseits der Durchtrittsöffnung angeordneten Zusatzverriegelung 12 zusammenwirken. Hierbei wird durch eine Bewegung der Zug- und Druckstange 11 in Richtung ihrer Längsachse mittels der Zusatzverriegelung 12 eine Schließrolle 19 in Richtung der Durchtrittsöffnung, also in einer zur Fahrzeugwand 1 im wesentlichen normalen Richtung, hin- und herbewegt. Die Schließrollen 19 laufen dabei in im unteren Umfangsbereich der Türblätter 2 angeordneten Führungsschienen.

Mit jeder der beiden Schwenkscheiben 16 ist in ihrem äußeren Umfangsbereich des weiteren ein Ende einer Druckfeder 17 befestigt, die mit ihrem anderen Ende an der entsprechenden Tragkonsole 5 verbunden ist. In der Position der Schwenkscheibe 16, die der geschlossenen Schwenkschiebetür entspricht (Fig. 1b), kommt das mit der Schwenkscheibe 16 verbundene Ende der Druckfeder 17 im linken oberen Bereich der Schwenkscheibe 16 zu liegen, wo sie sich in einem gespannten Zustand befindet. Die Verbindungsstange 15 kommt in dieser Position in der linken unteren Hälfte der Schwenkscheibe 16 zu liegen, wobei die Endposition der Schließ-Bewegung durch einen Anschlag 23 definiert wird. Wird die Schwenkscheibe 16, entweder manuell in Notsituationen oder durch den Motor 7A, in Bezug auf Fig. 1b im Uhrzeigersinn gedreht, wird die Druckfeder 17 noch mehr gespannt, bis schließlich bei Überschreiten eines Totpunktes die Druckrichtung der Druckfeder 17 die Drehbewegung der Schwenkscheibe 16 unterstützt. Es wird schließlich die Konfiguration gemäß Fig. 2b erreicht, die der geöffneten Stellung der Schwenkschiebetür entspricht, und bei der das mit der Schwenkscheibe 16 verbundene Ende der Druckfeder 17 in der rechten unteren Hälfte der Schwenkscheibe 16 zu liegen kommt und das mit der Schwenkscheibe 16 verbundene Ende der Verbindungsstange 15 in der rechten oberen Hälfte der Schwenkscheibe 16 zu liegen kommt. Die Druckfeder 17 befindet sich auch in dieser Position in gespanntem Zustand. Die Druckfeder 17 wird durch deren unterschiedliche Wirkung auf die Schwenkscheibe 16 im Zuge des Überschreitens des Totpunktes im folgenden auch als Übertotpunktfeder 17 bezeichnet.

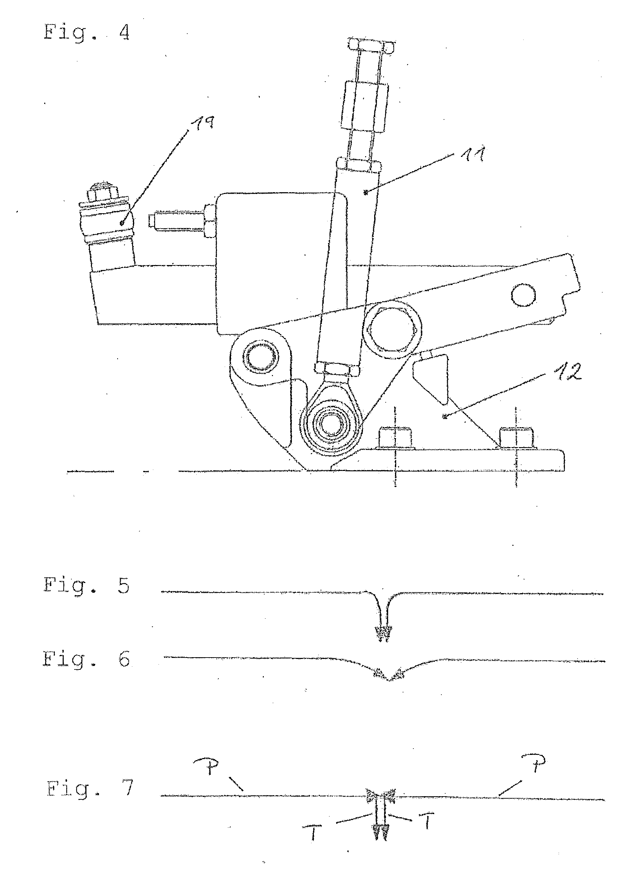

Die Funktionsweise der erfindungsgemäßen Schwenkschiebetür wird nun ausgehend von Fig. 2 erläutert. Hierbei befindet sich die Schwenkschiebetür in deren geöffneten Position, bei der die Türblätter 2 in geringem Abstand außerhalb der Fahrzeugwand 1 ruhen und von der Rolle 8 und dem Grundprofil 6 in dieser Lage fixiert werden. Die Schlitten 4 befinden sich in deren jeweils geringsten Entfernung zu den Tragkonsolen 5 und der Tragrahmen sowie das Führungsrund 9 sind in Richtung des Fahrzeugäußeren versetzt. Bei Betätigung von einem der beiden Motoren 7 (in den Fig. 1 bis 3 etwa der rechte Motor 7B) wird die Gewindespindel 10 in Drehung versetzt, wobei die Drehbewegung mithilfe der Spindelmutter 18 in eine Translationsbewegung umgewandelt wird. Aufgrund der entgegengesetzten Orientierung der Gewinde bewegt sich der linke Schlitten 4 mit Bezug auf Fig. 3 nach rechts und der rechte Schlitten 4 nach links. Beide Schlitten 4 vollziehen somit eine Bewegung in zur Fahrzeugwand 1 im wesentlichen paralleler Richtung P, wie in Fig. 7 schematisch illustriert ist. Die Schlitten 4 sind dabei in dieser Parallelbewegung synchronisiert und werden vom Führungsrund 9 geführt. Diese Parallelbewegung stellt die erste Schließphase dar und wird im folgenden auch als Schiebebewegung bezeichnet, bei der sich die Türblätter 2 zunehmend vor die Durchtrittsöffnung schieben.

Die Betätigung des Motors 7B wird gestoppt, sobald sich die beiden Hauptschließkanten der Türblatter 2, also deren jeweils innere, vertikale Kante, berühren. Diese Zustellbewegung kann sehr exakt ausgeführt werden und der Anpressdruck der Hauptschließkanten genau bestimmt werden. Die Rolle 8 kommt dabei vor dem Schlitz 20 zu liegen. Das Führungsrund 9 stellt somit im wesentlichen die erste Führungseinrichtung für die Schlitten 4 und somit für die Türblatter 2 dar, wenngleich ersichtlich ist, dass auch andere Ausführungsformen denkbar wären, etwa mithilfe von Führungsschienen oder dergleichen.

Zur Verwirklichung der zweiten Schließphase wird nun der zweite Motor 7A betätigt, der die mit Bezug auf die Fig. 1 bis 3 linke Schwenkscheibe 16 in Drehung versetzt. Mithilfe der Synchronisationsstange 13 wird auch die rechte Schwenkscheibe 16 in eine zur linken Schwenkscheibe 16 synchronisierte Drehbewegung versetzt. Aufgrund der Verbindungsstangen 15 stoßen sich die Schwenkscheiben 16 dadurch von den Tragkonsolen 5 ab und versetzen den Tragrahmen und somit auch das Führungsrund 9 in Richtung des Fahrzeuginneren. Damit werden aber auch die Schlitten 4 und somit die Türblätter 2 in Richtung des Fahrzeuginneren versetzt, wobei die Rolle 8 vom Schlitz 20 aufgenommen und in ihm geführt wird. Die Übertotpunktfedern 17 werden hierbei zunehmend gespannt, verhindern aber nach Überschreiten eines Totpunktes die Bewegung des Führungsrund 9 in Richtung des Fahrzeugäußeren. Die Zug- und Druckstangen 11 werden im Zuge der Drehbewegung der Schwenkräder 16 abwärts bewegt, wodurch die Schließrollen 19 in Richtung des Fahrzeuginneren bewegt werden. Da die Schließrollen 19 in Eingriff mit Führungsschienen der Türblätter 2 stehen, wird die Bewegung der Türblätter 2 in Richtung des Fahrzeuginneren dadurch unterstützt. Diese Bewegung der Türblätter 2 in transversaler Richtung T ist in Fig. 7 schematisch dargestellt und wird in weiterer Folge auch als Schwenkbewegung bezeichnet. Diese Schwenkbewegung stellt die zweite Schließphase dar, bei der die Türblätter 2 in die Fahrzeugwand 1 versetzt werden und für einen flächenbündigen Abschluss mit der Fahrzeugwand 1 sorgt. Die zweite Führungseinrichtung wird somit im wesentlichen durch den Schlitz 20 und das Führungsrund 14 gebildet, wobei ersichtlich ist, dass auch andere Ausführungsformen denkbar wären, etwa mithilfe von Führungsschienen oder dergleichen.

Der Unterschied zwischen der durch separate Führungseinrichtungen sowie zweier Schließantriebe 7 vermittelten Trennung der Schließbewegung in zwei unterschiedliche Schließphasen gemäß der Erfindung und dem Bewegungsablauf der Türblätter 2 gemäß dem Stand der Technik ist schematisch in den Fig. 5 und 6 illustriert. Die Fig. 5 und 6 zeigen hierbei übliche Schließbewegungen der Türblätter 2, bei denen mithilfe lediglich einer Führungseinrichtung sowie lediglich einem Schließantrieb eine Schiebe- und Schwenkbewegung verwirklicht wird, indem die Führungseinrichtung je nach Ausführungsform in unterschiedlichem Winkel abgelenkt ausgeführt ist. Dadurch muss die gesamte kinetische Energie der Türblätter 2 aus der Schiebebewegung in die Schwenkbewegung übernommen werden, was an den Hauptschließkanten der beiden Türblätter 2 mitunter erhebliche Einklemmkräfte nach sich zieht.

Durch die kinematische Entkoppelung der beiden Schließphasen kann somit auf unterschiedliche Anforderungen von Schiebe- und Schwenkbewegung Rücksicht genommen werden, insbesondere können die Einklemmkräfte an der Hauptschließkante der beiden Türblätter 2 optimiert werden.

## Patentansprüche

1. Schwenkschiebetür zum Verschließen von Durchtrittsöffnungen in einer Fahrzeugwand (1) mithilfe eines Schließantriebes (7), die im Zuge der Schließbewegung von mindestens einer Führungseinrichtung in einer ersten Schließphase vor die Durchtrittsöffnung geschoben wird und in einer zweiten Schließphase in die Durchtrittsöffnung versetzt wird, **dadurch gekennzeichnet, dass** für die erste Schließphase eine erste Führungseinrichtung (9,6) mit einem ersten elektrischen Schließantrieb (7B) vorgesehen ist, und für die zweite Schließphase eine zweite Führungseinrichtung (20,14) mit einem zweiten elektrischen Schließantrieb (7A) vorgesehen ist und beide Schließantriebe im oberen Bereich vorzugsweise im oberen Drittel der Schwenkschiebtür angeordnet sind, wobei die Führungseinrichtungen als Linerkugelführungen ausgebildet sind.

2. Schwenkschiebetür nach Anspruch 1, **dadurch gekennzeichnet, dass** die erste Führungseinrichtung von einem sich quer über den oberen Bereich der Durchtrittsöffnung erstreckenden Führungsrund (9) und einem Grundprofil (6) gebildet wird, auf dem ein mit der Schwenkschiebetür verbundener Schlitten (4) verschiebbar gelagert ist.

3. Schwenkschiebetür nach Anspruch 2, **dadurch gekennzeichnet, dass** das Führungsrund (9) in einem Tragrahmen (21) gehalten ist, der in Durchtrittsrichtung beweglich gelagert ist.

4. Schwenkschiebetür nach Anspruch 3, **dadurch gekennzeichnet, dass** der Schlitten (4) mit einer Rolle (8) ausgestattet ist, die während der ersten Schließphase an einem sich quer über den oberen Bereich der Durchtrittsöffnung erstreckenden Grundprofil (6) abrollt, wobei das Grundprofil (6) einen die zweite Führungseinrichtung (20) bildenden, in Durchtrittsrichtung verlaufenden Schlitz (20) aufweist, der die Rolle (8) bei einer Bewegung des Tragrahmens (21) auf den Führungsrund (14) in Durchtrittsrichtung aufnimmt und während der zweiten Schließphase die Schwenkschiebetür in Richtung Durchtrittsöffnung führt.

5. Schwenkschiebetür nach Anspruch 3 oder 4, **dadurch gekennzeichnet, dass** der Tragrahmen (21) mit einer Schwenkscheibe (16) ausgestattet ist, die vom zweiten Schließantrieb (7A) angetrieben wird, wobei die Schwenkscheibe (16) über eine Verbindungsstange (15) mit einer fest an der Fahrzeugwand (1) montierten Tragkonsole (5) verbunden ist, sodass bei Betätigung des zweiten Schließantriebes (7A) der Tragrahmen (21) in Durchtrittsrichtung bewegbar ist.

6. Schwenkschiebetür nach Anspruch 5, **dadurch gekennzeichnet, dass** eine Zug- und Druckstange (11) vorgesehen ist, die mit der Schwenkscheibe (16) sowie mit Schließrollen (19) verbunden ist, die in Führungsschienen im unteren Bereich der Schwenkschiebetür (2) eingreifen, sodass bei Betätigung des zweiten Schließantriebes (7A) die durch die Schwenkscheibe (16) vermittelte Bewegung der Schwenkschiebetür (2) in Durchtrittsrichtung durch die Schließrollen (19) unterstützt wird.

7. Schwenkschiebetür nach einem der Ansprüche 2 bis 6, **dadurch gekennzeichnet, dass** der erste Schließantrieb (7B) eine Gewindespindel (10) antreibt, der mit einer Spindelmutter (18) zusammenwirkt, die in Eingriff mit dem Schlitten (4) steht.
